# EUROPÄISCHE PATENTANMELDUNG

(11) **EP 4 718 394 A1**
(43) Veröffentlichungstag der Anmeldung: **01.04.2026**
(21) Anmeldenummer: 25201681.1
(22) Anmeldetag: 11.09.2025
(51) Int. Cl.: G06V 20/56, B61L 23/04, G08G 1/16

(54) **VERFAHREN ZUM BESTIMMEN EINER GÜTE EINES ERFASSUNGSSYSTEMS EINES TRÄGERSYSTEMS, COMPUTERPROGRAMMPRODUKT, COMPUTERLESBARES SPEICHERMEDIUM SOWIE ERFASSUNGSSYSTEM**

(30) Priorität: 26.09.2024 DE 102024209328
(71) Anmelder: Siemens Mobility GmbH, 80997 München (DE)
(72) Erfinder: Kaukewitsch, Christof, 81739 München (DE); Schönhaar, Hannes, 80997 München (DE)
(74) Vertreter: Siemens Patent Attorneys

(57) **Zusammenfassung**

Die Erfindung betrifft ein Verfahren zum Bestimmen einer Güte eines Erfassungssystems (34), mit den Schritten: Erfassen eines Objekts (28) zumindest in einer ersten Entfernung (40) mittels einer Erfassungseinrichtung (12, 14, 16) zumindest zu einem ersten Zeitpunkt (t1); Bestimmen von zumindest einem ersten Objektparameter (42) des Objekts (28) zum ersten Zeitpunkt (t1) mittels einer elektronischen Recheneinrichtung (36); Erfassen des Objekts (28) zumindest in einer zweiten Entfernung (44) mittels einer Erfassungseinrichtung (12, 14, 16) zumindest zu einem zum ersten Zeitpunkt (t1) späteren zweiten Zeitpunkt (t2); Bestimmen von zumindest einem zweiten Objektparameter (46) des Objekts (28) zum zweiten Zeitpunkt (t2) mittels der elektronischen Recheneinrichtung (36); Vergleichen des ersten Objektparameters (42) mit dem zweiten Objektparameter (46) mittels der elektronischen Recheneinrichtung (36); und Bestimmen der Güte des Erfassungssystems (34) in Abhängigkeit von dem Vergleich mittels der elektronischen Recheneinrichtung (36). Ferner betrifft die Erfindung ein Computerprogrammprodukt, ein computerlesbares Speichermedium sowie ein Erfassungssystem (34).

## Beschreibung

Die nachfolgende Erfindung betrifft ein Verfahren zum Bestimmen einer Güte eines Erfassungssystems eines Trägersystems gemäß dem geltenden Patentanspruch 1. Ferner betrifft die Erfindung ein entsprechendes Computerprogrammprodukt, ein entsprechendes computerlesbares Speichermedium sowie ein Erfassungssystem.

Komplexe technische Systeme wie zum Beispiel für Object Detection, Tracking- und Handling-Systeme sind von herausragender Bedeutung für sicherheitskritische, verkehrstechnische und industrielle Anwendungen. Eine besondere Relevanz erhält dabei die Object Detection, Tracking und Handling beim autonomen Fahren, sei es straßen- oder schienengebunden, da hier auch sicherheitsrelevante Aspekte zu berücksichtigen sind. Fehler beim Object Tracking können beispielsweise dazu führen, dass die aktuelle Verkehrssituation falsch eingeschätzt wird. Dies kann sowohl die Sicherheit der Verkehrsteilnehmer als auch die Verfügbarkeit der technischen Anwendungen einschränken.

Bei komplexen technischen Anwendungen wie zum Beispiel Object Detection, Tracking- und Handling-Systemen, die beispielsweise einen oder mehrere Fusionsprozesse, beispielsweise mittels eines Kalman-Filters, beinhalten, können bei den hierbei implementierten Algorithmen Unsicherheiten entstehen, deren quantitative Bewertung in Bezug auf eine Sicherheitsnachweisführung besonders herausfordernd ist. Das Systemverhalten ist von komplexen Einflüssen abhängig, was sich in einer großen Anzahl zu berücksichtigender Szenarien für die Sicherheitsnachweisführung widerspiegelt. Dies schließt die Berücksichtigung zeitlicher Aspekte und anderer spezifischer Fehlerfälle, zum Beispiel Verdeckung von Objekten, mit ein.

Aktuell ist es noch schwierig beziehungsweise nicht möglich, den Nachweis zu führen, dass die Anwendungen hinreichend sicher und verfügbar sind. Dies gilt insbesondere, wenn zum Beispiel datengetriebene Prozesse, zum Beispiel Machine-Learning (ML), involviert sind.

Üblicherweise wird die Komplexität im Stand der Technik auf ein mögliches Minimum reduziert und durch häufig genutzte sowie bekannte Technologien umgesetzt. Deshalb stützt sich die klassische quantitative Sicherheitsnachweisführung auf Analysen der dedizierten Sicherheitsfunktionen, die zum Beispiel in Fehlerbäumen übersichtlich dargestellt werden können. In komplizierten Fällen, in denen zum Beispiel die Reihenfolge des Auftretens von Ereignissen relevant ist, werden für eine Modellierung auch Markov-Ketten herangezogen.

Ein zentraler Bestandteil der Sicherheitsnachweisführung ist die Verifikation und Validierung. Dies beinhaltet üblicherweise umfangreiche Tests, sowohl auf Systemebene als auch in den einzelnen Systemkomponenten. Bisher wurden insbesondere bei Software-Tests die Umfänge so weit bestimmt, dass eine möglichst vollständige Abdeckung erreicht wird.

Für komplexe Perzeptionssysteme/Erfassungssysteme, wie nachfolgend adressiert, basieren Verifikation und Validierung typischerweise auf Simulationen, spezifisch aufgesetzten Tests und umfassender Felderfahrung, was allerdings unter realen Bedingungen extrem lange Beobachtungszeiträume nach sich ziehen könnte, da die zu erfassenden Ereignisse gegebenenfalls sehr seltenen Charakter haben können. Zudem ist es problematisch, diese Ereignisse zeitnah zu bewerten, da im Nachhinein gegebenenfalls manuell auf permanent mitprotokollierte Daten zurückgegriffen werden müsste, was sich als aufwendig und zeitintensiv erwiesen hat.

Bei Erfassungssystemen müssen sicherheitsbezogene Entscheidungen zustandsbasiert oft schon relativ frühzeitig getroffen werden, um die Wirksamkeit der resultierenden sicherheitsbezogenen Maßnahmen sicherzustellen. Dies könnte zum Beispiel ein frühzeitiges Signalisieren, beispielsweise ein akustisches Signal, das Einleiten einer Bremsung sein, um den rechtzeitigen Stillstand eines Fahrzeugs vor einer Kollision mit einem detektierten Objekt sicherzustellen, oder ein Lenkmanöver sein. Abhängig von der Fahrzeuggeschwindigkeit variiert der Moment, in dem diese Entscheidung getroffen werden muss. Hieraus ergibt sich dann auch die Notwendigkeit einer nicht unerheblichen Sensorreichweite.

Es ist also von großer Bedeutung, Objekte in großer Entfernung frühzeitig und zuverlässig detektieren und klassifizieren zu können. Fehler hierbei können unmittelbar die Sicherheit oder die Verfügbarkeit des Erfassungssystems kompromittieren.

Aufgabe der vorliegenden Erfindung ist es, ein Verfahren, ein Computerprogrammprodukt, ein computerlesbares Speichermedium sowie ein Erfassungssystem zu schaffen, mittels welchen eine Güte des Erfassungssystems zuverlässig bestimmt werden kann.

Diese Aufgabe wird durch ein Verfahren, ein Computerprogrammprodukt, ein computerlesbares Speichermedium sowie ein Erfassungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Güte eines Erfassungssystems eines Trägersystems. Es wird ein Objekt in einer ersten Entfernung mittels einer Erfassungseinrichtung des Erfassungssystems zu einem ersten Zeitpunkt erfasst. Es erfolgt das Bestimmen von zumindest einem ersten Objektparameter des Objekts zum ersten Zeitpunkt mittels einer elektronischen Recheneinrichtung des Erfassungssystems. Es wird das Objekt in einer zweiten Entfernung mittels einer Erfassungseinrichtung des Erfassungssystems zu einem zum ersten Zeitpunkt späteren zweiten Zeitpunkt erfasst. Es erfolgt das Bestimmen von zumindest einem zweiten Objektparameter des Objekts zum zweiten Zeitpunkt mittels der elektronischen Recheneinrichtung. Der erste Objektparameter wird mit dem zweiten Objektparameter mittels der elektronischen Recheneinrichtung verglichen und es erfolgt das Bestimmen der Güte des Erfassungssystems in Abhängigkeit von dem Vergleich mittels der elektronischen Recheneinrichtung.

Insbesondere zielt somit die Erfindung auf ein Verfahren ab, um eine Bewertung und letztendlich Erhöhung der technischen Sicherheit und Verfügbarkeit des Erfassungssystems zu bestimmen und zu erleichtern beziehungsweise zu unterstützen, wodurch insbesondere die quantitative Nachweisführung ebenfalls ermöglicht ist.

Die Erfindung betrifft somit insbesondere ein Erfassungssystem, welches auch als Sensorsystem bezeichnet werden kann, bei dem eine Annäherung an Objekte oder eine Entfernung von Objekten erfolgt, die mit Hilfe der verfügbaren Sensorik erfasst und gegebenenfalls klassifiziert werden können. Häufig kommen mehrstufige Multisensorsysteme zum Einsatz, beispielsweise Kameras mit mehreren Brennweiten und dazu Lidarsensoreinrichtungen, um verschiedene Szenarien abzudecken. Dies könnten zum Beispiel neben der Erfassung weit entfernter Objekte auch Objekte im Mittel- oder Nahbereich sein, um zum Beispiel eine sichere Einfahrt in einen Bahnhof mit wartenden Passagieren sicherzustellen oder um das sichere Starten eines Zuges, insbesondere die so genannte Nahbereichsüberwachung, zu gewährleisten. Die Detektion in unterschiedlichen Entfernungsbereichen wird beispielsweise durch die Nutzung von Kameras mit unterschiedlichen Brennweiten realisiert. Im Prinzip ist das hier geschilderte Verfahren aber auch mit einem einzigen Sensor möglich.

Insbesondere ist davon auszugehen, dass nämlich bei zunehmender Beobachtungszeit und bei verringerter Entfernung sich die Chance verbessert, ein Objekt zu detektieren und richtig zu erkennen. Umgekehrt müssen zum Beispiel sicherheitsgerichtete Entscheidungen oftmals frühzeitig beziehungsweise in einer gewissen Entfernung zum Objekt getroffen werden. Sicherheitsgerichtete Entscheidungen könnten unter Berücksichtigung des geschwindigkeitsabhängigen Bremswegs und gegebenenfalls auch unter Berücksichtigung der Bewegung des Objektes zum Beispiel das Einleiten einer Bremsung sein. Während der Bremsung wird es aber in vielen Fällen möglich sein, das Objekt weiter und besser zu beobachten und zum Beispiel genauer zu bestimmen/zu klassifizieren. Bei rechtzeitig eingeleitetem Ausweichmanöver könnte man bei Annäherung dann auch feststellen, ob das Manöver überhaupt nötig war. Dies kann natürlich auch dazu führen, dass eine sicherheitsgerichtete Reaktion aufgehoben wird. Es wird vorausgesetzt beziehungsweise das System ist derart zu gestalten, dass in den meisten Fällen ein zuverlässiges Tracking des Objekts zum Beispiel durch einen Fusionsalgorithmus, wie einen Kalman-Filter, möglich ist. Dies könnte bei Verdeckung oder signifikanter Geschwindigkeit des Objekts nicht gelten und könnte auch zum Ausschluss dieser Beobachtung aus der Gesamtstatistik führen.

Aus verlängerter Beobachtungsdauer sowie bei der Annäherung und durchführbarer Beobachtungen, insbesondere bei einer höheren Konfidenz in der Detektion und Klassifikation, entsteht für eine Referenzbewertung ein signifikant höheres Vertrauensniveau. Diese Referenzbewertung wird herangezogen, um die Güte der Entscheidung, die sicherheitsgerichtete Reaktion einzuleiten, also zum Beispiel, dass gebremst werden sollte, zu überprüfen. So können Fehlentscheidungen, wie zum Beispiel unnötiges Bremsen oder unterlassenes Bremsen in den meisten Fällen erkannt werden und permanent überwacht werden.

Das geschilderte Verfahren muss sich dabei nicht auf den akuten Gefährdungsbereich beschränken. Es kann auch in benachbarten Bereichen, zum Beispiel auf dem Bürgersteig oder neben dem Gleis, auf dem Gegengleis, auf der Gegenfahrbahn, durchgeführt werden. Selbstverständlich ist zu konstatieren, dass hier gegebenenfalls leicht abweichende Umgebungen und Szenarien vorliegen, die den Vergleich zwischen Beurteilung zum Referenzzeitpunkt im Vergleich zum Referenzzeitpunkt leicht beeinflussen können. Diese Ergebnisse können ebenfalls herangezogen werden, die Güte des Erfassungssystems abzuschätzen. Wenn weitere Bereiche einbezogen werden, wächst natürlich die statistische Basis und damit verbessert sich das Verfahren in der Güte der Abschätzung.

Sollte das Objekt nicht sicher getrackt/nachverfolgt werden, müsste auf eine Bewertung verzichtet oder die Bewertung auf einen Zeitraum beschränkt werden, zu dem eine hinreichend sichere Verfolgung gewährleistet ist. Entsprechende Ereignisse sind herauszufiltern oder im Sinne einer Worst-Case-Bewertung zu berücksichtigen. Es ist statistisch zu überwachen, wie oft das Tracking versagt. Im Falle von unterbliebenen erforderlichen Sicherheitsreaktionen, insbesondere so genannte False Negatives, und gleichzeitig fehlerhafter Referenzbewertung kann eine nachträgliche Korrektur der zugrundeliegenden Statistik möglich sein, indem die dann auftretenden Unfälle hinzugerechnet würden. Im Falle von so genannten Near Misses, bei welchen sich beispielsweise ein Objekt im letzten Moment aus dem Kollisionspfad entfernt hat, kann in diesem seltenen Fall eine Unsicherheit verbleiben, da eine Kollisionserkennung nicht erfolgt.

Die Referenzbewertung kann teilweise mit sowieso vorhandenen nicht-künstlicher Intelligenz- oder künstlicher Intelligenz-basierten Detektoren/Klassifikatoren erfolgen, es ist aber auch möglich, zusätzliche nicht-künstliche Intelligenz- oder künstliche Intelligenz-basierte Detektoren/Klassifikatoren einzusetzen. Ziel ist es, unter Ausnutzung der Annäherung und deutlich verlängerter Beobachtung eine relativ hohe Konfidenz für die Referenzbewertung zu erzielen. Es ist jedoch klar, dass es sich nicht um einen perfekten "Ground Truth" handelt, daher kann insbesondere hierzu der Begriff "Weak Ground Truth" verwendet werden.

Der so genannte Ground Truth ist dabei ein Begriff, der insbesondere im Bereich von Computer Vision, maschinellem Lernen und Datenwissenschaft verwendet wird, um den korrekten oder wahren Wert für ein bestimmtes Datenstück oder eine Information zu bezeichnen. Es ist die objektive Wahrheit oder der Bezugspunkt, gegen den die Vorhersagen oder Ausgaben eines Modells verglichen werden, um seine Genauigkeit oder Leistung zu bewerten. In vielen Anwendungen wird Ground Truth als Referenzzustand verwendet, um die Qualität automatisierter Systeme, Algorithmen oder Modelle zu beurteilen, die auf Daten basieren und diese analysieren, interpretieren oder daraus Entscheidungen ableiten. Zum Beispiel kann die so genannte Grundwahrheit in der Bilderkennung manuell mit Objektgrenzen oder Klassenlabels versehene Bilder sein, die von menschlichen Experten anhand visueller Merkmale beschriftet wurden. Diese Beschriftungen dienen als Referenzstandard, gegen den die Leistung automatisierter Bildsegmentierungs- oder Objekterkennungsalgorithmen gemessen wird. Ground Truth ist dabei wichtig, weil diese eine zuverlässige und unvoreingenommene Methode bietet, um die Genauigkeit und Zuverlässigkeit von Modellen, Algorithmen oder Systemen zu beurteilen. Die Erhebung von Ground Truth-Daten kann jedoch zeitaufwendig, kostspielig oder sogar unpraktisch sein, insbesondere wenn es sich um große oder komplexe Datensätze handelt. Daher greifen Forscher und Praktiker in solchen Fällen häufig auf verschiedene Techniken zurück wie zum Beispiel aktives Lernen, Crowd Sourcing oder die Generierung synthetischer Daten, um hochwertige Ground Truth-Daten in großem Umfang zu erhalten.

Insbesondere hat somit die Erfindung den Vorteil, dass eine Konstruktion einer so genannten Weak Ground Truth als Referenz aus weiteren verfügbaren Sensordaten und eines gegebenenfalls sowieso vorhandenen Trackingalgorithmus genutzt werden kann. Durch Vergleich der Weak Ground Truth bezüglich False Positives und False Negatives erfolgt eine kontinuierliche Überprüfung des Erfassungssystems bezüglich wesentlicher Aspekte der Sicherheit und Verfügbarkeit und der Güte, dies kann im Sinne eines so genannten Health Checks oder zur quantitativen Beurteilung erfolgen. Die verbleibenden Einstellungen aufgrund verbleibender Restunsicherheiten werden idealerweise abgeschätzt. Eine erforderliche Vermessung und Kartographierung der Strecke zur Erzeugung von Referenzobjekten zur Überprüfung der Funktionsfähigkeit der Sensorik kann damit gegebenenfalls ebenfalls entfallen. Dadurch können eine Erhöhung der technischen Sicherheit und die Verfügbarkeit sowie eine Erleichterung, Unterstützung und gegebenenfalls praktische Ermöglichung einer quantitativen Nachweisführung ermöglicht werden. Auch kann eine Degradation des Erfassungssystems oder von Teilen dieses Systems frühzeitig erkannt werden.

Insbesondere kann das Erfassungssystem als Teil eines Kraftfahrzeugs als Trägersystem, insbesondere eines Zuges, angesehen werden. Es sind selbstverständlich auch weitere Kraftfahrzeuge wie beispielsweise Personenkraftwagen, Lastkraftwagen, Flugzeug, Schiff, Satellit oder dergleichen möglich.

Bevorzugt kann die erste Entfernung größer sein als die zweite Entfernung. Ferner kann insbesondere eine relative Entfernung zwischen dem Trägersystem und dem Objekt bestimmt werden.

Des Weiteren kann insbesondere vorgesehen sein, dass die Bewertung der Güte mehrfach während einer Bewegung des Trägersystems oder auch permanent während der Bewegung des Trägersystems durchgeführt wird.

Dabei spielt die Objektdetektion bei Zügen insbesondere eine wichtige Rolle im Kontext des autonomen Fahrens, insbesondere für autonome Shuttles oder Züge, die auf Schienen- oder Straßeninfrastruktur fahren. Das Ziel ist es dabei sicherzustellen, dass autonome Fahrzeuge in der Lage sind, andere Züge oder relevante Objekte in ihrer Umgebung zu erkennen, um Kollisionen oder Unfälle zu vermeiden und die Sicherheit im Straßen- oder Schienenverkehr zu erhöhen. Die Objektdetektion bei Zügen für autonome Kraftfahrzeuge umfasst ähnliche Schritte wie beispielsweise die Echtzeitverarbeitung. Die Objektdetektion muss in Echtzeit erfolgen, damit das Kraftfahrzeug schnell auf Veränderungen in seiner Umgebung reagieren kann. Des Weiteren muss auch die Genauigkeit entsprechend hoch sein. Die Erkennung von Zügen und anderen relevanten Objekten muss sehr genau sein, um Kollisionen oder Unfälle zu vermeiden. Das System muss auch unter verschiedenen Lichtverhältnissen, Wetterbedingungen, zeitweilige Objektverdeckung und Umgebungen funktionieren, um Ausfälle oder Fehlfunktionen zu minimieren. Die Objektdetektion bei Zügen für autonome Kraftfahrzeuge kann auch mit anderen Verkehrsteilnehmern und Infrastruktursystemen kommunizieren, um zum Beispiel Signale oder Warnungen zu empfangen oder zu senden. Die Objektdetektion bei Zügen kann in das Gesamtsystem des autonomen Kraftfahrzeugs integriert werden, einschließlich Navigations-, Lenkungs- und Bremssteuerungssysteme. Durch die Verwendung von fortschrittlichen Techniken wie insbesondere Deep Learning und maschinellem Lernen können autonome Fahrzeuge Züge und andere relevante Objekte in ihrer Umgebung erkennen und verfolgen, was zu einer höheren Sicherheit und Effizienz im Straßen- oder Schienenverkehr beiträgt. Somit ist es insbesondere auch von entscheidender Bedeutung, die entsprechende Güte des Erfassungssystems zur Objektdetektion zu kennen und entsprechend reagieren zu können. Dies kann für die Zulassung des autonomen Kraftfahrzeugs entscheidend sein.

Insbesondere ist es möglich, dass auch zu mehreren Zeitpunkten das Objekt mit weiteren Erfassungseinrichtungen oder mit der Erfassungseinrichtung erfasst und beobachtet wird. Insbesondere je näher sich das Objekt am Trägersystem befindet, desto genauer kann die Objektdetektion und somit die Bestimmung des zumindest einen Objektparameters durchgeführt werden. Somit können auch mehrere Zeitpunkte entsprechend überwacht werden und auf Basis der Überwachung von mehreren Zeitpunkten die Güte bestimmt werden.

Als erster Objektparameter und als zweiter Objektparameter können insbesondere die gleichen Eigenschaften des Objekts genutzt werden. Es sind jedoch auch andere Eigenschaften erfassbar, welche jedoch miteinander verglichen werden können.

Gemäß einer vorteilhaften Ausgestaltungsform wird das Objekt zum ersten Zeitpunkt mit der gleichen Erfassungseinrichtung, wie zum zweiten Zeitpunkt erfasst. Mit anderen Worten kann die gleiche Erfassungseinrichtung genutzt werden, um das Objekt zum ersten Zeitpunkt und zum zweiten Zeitpunkt zu erfassen. Als Erfassungseinrichtung kann beispielsweise eine Kamera, ein Lidarsensor, ein Ultraschallsensor oder ein Radarsensor eingesetzt werden. Bei den beschriebenen Erfassungseinrichtungen handelt es sich um bereits etablierte Systeme, welche bereits im Kraftfahrzeugbau, insbesondere auch im autonomen Zugverkehr, bereits hinlänglich bekannt sind und verbaut sind. Somit sind keine zusätzlichen Bauteile notwendig, da die bereits im Erfassungssystem vorhandenen Erfassungseinrichtungen genutzt werden können.

Ebenfalls vorteilhaft ist, wenn das Objekt zum ersten Zeitpunkt mit einer unterschiedlichen Erfassungseinrichtung, wie zum zweiten Zeitpunkt erfasst wird. Es ist selbstverständlich, dass zu weiteren Zeitpunkten auch weitere Bilder des Objekts erfasst werden können. Beispielsweise kann die Art der Erfassungseinrichtung unterschiedlich sein, beispielsweise kann zum ersten Zeitpunkt mit einer Kamera erfasst werden und zum zweiten Zeitpunkt mit einem Lidarsensor erfasst werden. Des Weiteren kann es sich im Wesentlichen um die gleiche Art von Erfassungseinrichtung handeln, beispielsweise um eine Kamera, jedoch kann die Kamera oder eine andere Kamera zum ersten Zeitpunkt eine andere Brennweite aufweisen als zum zweiten Zeitpunkt. Somit ist es ermöglicht, dass auf Basis von unterschiedlichen Erfassungseinrichtungen eine Güte des gesamten Erfassungssystems bestimmt werden kann.

Weiterhin vorteilhaft ist, wenn als Erfassungseinrichtung unterschiedliche Arten von Erfassungseinrichtungen bereitgestellt werden. Wie bereits erwähnt, können beispielsweise Kameras, Lidarsensoren und Radarsensoren sowie Ultraschallsensoren eingesetzt werden, um die Umgebung zu erfassen. Beispielsweise kann dann zum ersten Zeitpunkt mittels eines Lidarsensors das Objekt erfasst werden und zum zweiten Zeitpunkt mittels einer Kamera das Objekt erfasst werden. Somit ist es möglich, dass auf unterschiedliche Erfassungsarten zurückgegriffen werden kann, wodurch eine robuste Umgebungserfassung realisiert werden kann.

Es hat sich weiterhin als vorteilhaft erwiesen, wenn als Erfassungseinrichtung gleiche Arten von Erfassungseinrichtungen bereitgestellt werden, wobei sich die Erfassungseinrichtungen in der Erfassungsreichweite unterscheiden. Wie bereits erwähnt können Kameras mit unterschiedlichen Brennweiten genutzt werden, um die Umgebung zu erfassen. Beispielsweise kann eine erste Kamera für eine hohe Entfernung genutzt werden, eine zweite Kamera für eine mittlere Entfernung genutzt werden und eine dritte Kamera für einen Nahbereich verwendet werden. Somit kann eine robuste Umgebungserfassung realisiert werden.

In einer weiteren vorteilhaften Ausgestaltungsform ist vorgesehen, dass ein Zeitunterschied zwischen dem ersten Zeitpunkt und dem zweiten Zeitpunkt beim Vergleichen und/oder beim Bestimmen der Güte berücksichtigt wird. Sollte beispielsweise das Objekt zum ersten Zeitpunkt erfasst werden und das Objekt zum zweiten Zeitpunkt, welcher sich sehr nah am ersten Zeitpunkt befindet, wiederum erfasst werden, so kann der Vertrauenswert der Güte entsprechend niedrig sein, da lediglich eine geringe Änderung des Objekts beziehungsweise der Entfernung zum Objekt stattgefunden hat. Sollte sich jedoch ein größerer Zeitraum zwischen dem ersten Zeitpunkt und dem zweiten Zeitpunkt liegen, so kann die Vertrauensgüte entsprechend steigen, da zum zweiten Zeitpunkt dann eine deutlich höhere Wahrscheinlichkeit vorliegt, die korrekte Detektion des Objekts durchzuführen. Insbesondere kann auch eine kontinuierliche Beobachtung des Objekts durchgeführt werden.

Weiterhin vorteilhaft ist, wenn als Objektparameter eine Objektklasse und/oder eine Objektart und/oder eine Objektbewegung und/oder eine Objektposition bestimmt werden kann. Unter Objektklasse kann beispielsweise verstanden werden, ob es sich um statische Objekte oder dynamische Objekte handelt. Ferner kann unterschieden werden, ob es sich um lebendige oder nicht lebendige Objekte handelt. Des Weiteren kann unterschieden werden, ob es sich um überfahrbare Objekte handelt oder um Objekte, welche beispielsweise eine Kollision und somit auch Schäden verursachen könnten. Als Objektart kann insbesondere das Objekt selbst identifiziert werden, beispielsweise als Mensch, als Tier, als Kraftfahrzeug oder dergleichen. Des Weiteren kann auch die Objektbewegung, insbesondere im Sinne von einer Objekttrajektorie bestimmt werden. Beispielsweise kann bestimmt werden, ob sich das Objekt auf ein Gleis zubewegt oder von einem Gleis wegbewegt. Des Weiteren kann auch die Objektposition, insbesondere relativ zum Trägersystem selbst, entsprechend als Objektparameter bestimmt werden. Somit kann eine sehr detaillierte Objektidentifikation realisiert, wodurch zuverlässig die Güte bestimmt werden kann und beispielsweise entsprechende Maßnahmen ergriffen werden können, um beispielsweise eine Kollision zwischen dem Objekt und dem Trägersystem zu verhindern.

Eine weitere vorteilhafte Ausgestaltungsform sieht vor, dass zum Bestimmen des Objektparameters ein Kalman-Filter verwendet wird. Ein Kalman-Filter ist dabei ein mathematisches Verfahren zur Schätzung von Zuständen in so genannten dynamischen Systemen. Es handelt sich um einen Algorithmus zur Zustandsschätzung, der auf Bayes'schen Statistik und linearen Systemmodellen basiert. Der Kalman-Filter kann verwendet werden, um die Zustände eines Systems zu schätzen, wenn Messungen des Systems mit Rauschen behaftet sind und das System selbst einem stochastischen Prozess unterliegt. Ein typisches Anwendungsszenario für den Kalman-Filter ist die Integration von Messwerten aus verschiedenen Sensoren in Echtzeit, um genaue Schätzungen der Zustände eines Systems zu erhalten. Dabei werden die Vorteile der einzelnen Sensoren kombiniert und die Nachteile wie zum Beispiel begrenzte Reichweite oder Rauschen minimiert. Der Kalman-Filter beinhaltet zwei Hauptschritten. Zum einen dem Prädiktionsschritt und dem Korrekturschritt. Im Prädiktionsschritt wird die Zustandsgleichung des Systems verwendet, um den Zustand für den nächsten Zeitpunkt vorherzusagen. Im Korrekturschritt werden die Messwerte mit dem vorhergesagten Zustand kombiniert, um einen verbesserten Wert des aktuellen Zustands zu erhalten. Der Kalman-Filter ist ein effizienter Algorithmus zur Zustandsschätzung, der in vielen Anwendungen eingesetzt wird, insbesondere in Navigation und Lokalisierung sowie dem autonomen Fahren. Er kann auch für nicht-lineare Systeme erweitert werden, zum Beispiel durch die Verwendung von Extended Kalman-Filtern oder Uncented Kalman-Filtern.

Es hat sich weiterhin als vorteilhaft erwiesen, wenn in Abhängigkeit von dem bestimmten Objektparameter eine Kollisionswahrscheinlichkeit zwischen dem Objekt und dem Trägersystem bestimmt wird. Beispielsweise kann auf Basis der Objektbewegung und der Objektposition eine Kollisionswahrscheinlichkeit zwischen dem Objekt und dem Trägersystem bestimmt werden. Sollte eine Kollisionswahrscheinlichkeit entsprechend bestimmt werden, so können beispielsweise entsprechende Gegenmaßnahmen eingeleitet werden, um eine Kollision zu verhindern. Beispielsweise kann eine Bremsung des Trägersystems, oder eine Lenkung des Trägersystems initiiert werden. Des Weiteren können auch akustische oder visuelle Signale erzeugt werden, um beispielsweise das Objekt vor einer potentiellen Kollision zu warnen.

In einer weiteren vorteilhaften Ausgestaltungsform kann vorgesehen sein, dass eine Eigenbewegung des Trägersystems beim Bestimmen der Kollisionswahrscheinlichkeit berücksichtigt wird. Insbesondere kann somit bestimmt werden, wann beispielsweise eine Bremsung stattzufinden hat, wenn eine Kollisionswahrscheinlichkeit besteht. Des Weiteren kann auch die Bremskraft in Abhängigkeit der Eigenbewegung bestimmt werden. Somit ist es ermöglicht, dass die Gefahr einer Kollision reduziert wird beziehungsweise ein Schaden bei der Kollision entsprechend reduziert wird. Es kann auch vorgesehen sein, dass eine Bremsung entsprechend wieder aufgehoben wird.

Ebenfalls vorteilhaft ist, wenn in Abhängigkeit von der bestimmten Kollisionswahrscheinlichkeit ein Steuersignal für eine fahrdynamische Einrichtung des Trägersystems erzeugt wird, so dass die Kollision vermieden oder eine Schwere der Kollision reduziert wird. Insbesondere kann beispielsweise eine Bremsung des Trägersystems initiiert werden. Hierzu können entsprechende Bremseinrichtungen als fahrdynamische Einrichtungen des Trägersystems angesteuert werden. Je nachdem, zu welchem Zeitpunkt das Objekt erkannt wird und die Kollisionswahrscheinlichkeit bestimmt wird, kann somit die Kollision gänzlich vermieden werden oder zumindest eine Schwere der Kollision entsprechend reduziert werden. Ferner kann auch, wenn beispielsweise keine Kollisionswahrscheinlichkeit mehr prädiziert wird, die Bremsung wieder aufgehoben werden. Somit kann die Verfügbarkeit des Erfassungssystems und/oder des Trägersystems gesteigert werden.

In einer weiteren vorteilhaften Ausgestaltungsform ist vorgesehen, dass ein Unterschied einer Umgebung des Trägersystems im ersten Zeitpunkt zu einer Umgebung zum zweiten Zeitpunkt beim Vergleich berücksichtigt wird. Beispielsweise können sich Wetterverhältnisse beziehungsweise Lichtverhältnisse vom ersten Zeitpunkt zum zweiten Zeitpunkt entsprechend verändern. Diese Wetterverhältnisse können nun berücksichtigt werden, um die Objektdetektion zuverlässig durchführen zu können. Somit kann verbessert eine Objektdetektion realisiert werden und somit die Güte des Erfassungssystems bestimmt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit zumindest einem Computerprogrammprodukt nach dem vorhergehenden Aspekt.

Ein nochmals weiterer Aspekt der Erfindung betrifft ein Erfassungssystem für ein Trägersystem, mit zumindest einer Erfassungseinrichtung und mit einer elektronischen Recheneinrichtung, wobei das Erfassungssystem zum Durchführen eines Verfahrens nach dem vorhergehenden Aspekt ausgebildet ist. Insbesondere wird das Verfahren mittels des Erfassungssystems durchgeführt.

Das Erfassungssystem kann dabei eine erste Erfassungseinrichtung aufweisen und das Objekt zum ersten Zeitpunkt und zum zweiten Zeitpunkt mit der ersten Erfassungseinrichtung erfassen. Ferner kann das Erfassungssystem auch zumindest eine zweite Erfassungseinrichtung aufweisen und zum ersten Zeitpunkt mit der ersten Erfassungseinrichtung das Objekt detektieren und zum zweiten Zeitpunkt mit der zweiten Erfassungseinrichtung das Objekt detektieren.

Die elektronische Recheneinrichtung kann beispielsweise eine künstliche Intelligenz aufweisen, insbesondere zur Objektdetektion.

Ein nochmals weiterer Aspekt der Erfindung betrifft ein Trägersystem mit einem Erfassungssystem nach dem vorhergehenden Aspekt. Das Trägersystem kann dabei insbesondere als Zug ausgebildet sein.

Vorteilhafte Ausgestaltungsformen des Verfahrens sind als vorteilhafte Ausgestaltungsformen des Computerprogrammprodukts, des computerlesbaren Speichermediums, des Erfassungssystems sowie des Trägersystems anzusehen. Das Erfassungssystem sowie das Trägersystem weisen hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebene Kategorie für eine Klassifizierungsaufgabe, einen oder mehrere prädizierte Werte oder eine prädizierte Sequenz beinhalten kann.

Computervision beschäftigt sich dabei insbesondere mit der automatischen Verarbeitung in Relation von visuellen Informationen. Das Ziel von Computervision ist es, Computersystemen beizubringen, Objekte, Personen, Szenen und Handlungen in digitalen Bildern und Videos zu erkennen, zu klassifizieren und darauf zu reagieren. Computervision-Systeme verwenden Algorithmen und Techniken aus dem Bereich des maschinellen Lernens, Mustererkennung und Signalverarbeitung, um visuelle Informationen zu verarbeiten und zu interpretieren. Dazu gehört insbesondere die Bildvorverarbeitung, die eine Verbesserung und Normalisierung von Bildern, zum Beispiel Rauschunterdrückung, Farbbalance, Winkelkorrektur und Skalierung umfasst. Ein weiterer Teil ist die Merkmalsextraktion, welche die Erkennung und die Extraktion relevanter Merkmale aus Bildern, zum Beispiel Kanten, Texturen, Form und Farben umfasst. Ferner wird die Objekterkennung durchgeführt, welche insbesondere die Identifizierung und Klassifizierung von Objekten in den Bildern beinhaltet, zum Beispiel Gesichter, Fahrzeuge, Gebäude und Landschaften. Eine Szenenanalyse ist ebenfalls Teil, wobei die Analyse und Interpretation von Szenen, beispielsweise die Erkennung von Handlungen, Bewegungen und Beziehungen zwischen Objekten, umfasst. Der Einsatz von Algorithmen des maschinellen Lernens ist dabei insbesondere vorgesehen, um Computervision-Systeme zu trainieren und ihre Leistung zu verbessern. Computervision und somit auch das erfindungsgemäße Verfahren hat zahlreiche Anwendungen in verschiedenen Bereichen wie beispielsweise Robotik, Medizin, Landwirtschaft, Sicherheit, Unterhaltung, Verkehr und vielen anderen. Durch die Weiterentwicklung von Techniken und Algorithmen wird Computervision immer leistungsfähiger und kann komplexe Aufgaben automatisieren und vereinfachen, weshalb solche Techniken insbesondere im Bereich von Kraftfahrzeugen, insbesondere im Bereich von Zügen, zuverlässig eingesetzt werden können.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigt die einzige Figur:

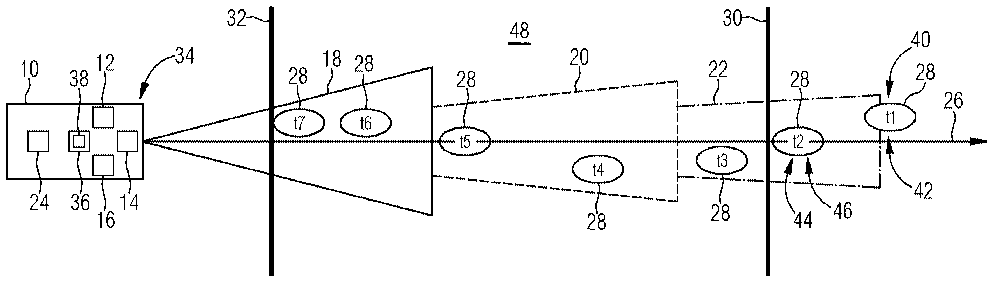

- FIG 1: eine schematische Draufsicht auf eine Ausführungsform eines Trägersystems mit einer Ausführungsform eines Erfassungssystems zum Durchführen einer Ausführungsform des erfindungsgemäßen Verfahrens.

In der Figur sind gleiche oder funktionsgleiche Elemente mit den gleichen Bezugszeichen versehen.

FIG 1 zeigt eine schematische Draufsicht gemäß einer Ausführungsform eines Trägersystems, insbesondere vorliegend als Kraftfahrzeug 10, ausgebildet. Das Kraftfahrzeug 10 ist insbesondere im vorliegenden Ausführungsbeispiel als Zug ausgebildet. Das Kraftfahrzeug 10 ist ferner zumindest teilweise autonom beziehungsweise vollautonom ausgebildet. Das Kraftfahrzeug 10 weist hierzu im vorliegenden Ausführungsbeispiel eine erste Erfassungseinrichtung 12, eine zweite Erfassungseinrichtung 14 sowie eine dritte Erfassungseinrichtung 16 auf. Der ersten Erfassungseinrichtung 12 ist ein erster Erfassungsbereich 18 zugeordnet. Der zweiten Erfassungseinrichtung 14 ist ein zweiter Erfassungsbereich 20 zugeordnet. Der dritten Erfassungseinrichtung 16 ist ein dritter Erfassungsbereich 22 zugeordnet. Die Erfassungseinrichtungen 12, 14, 16 können dabei von unterschiedlicher Art sein, beispielsweise kann eine der Erfassungseinrichtungen 12, 14, 16 als Lidarsensor oder als Radarsensor oder als Ultraschallsensor oder als Kamera ausgebildet sein, während eine andere der Erfassungseinrichtungen 12, 14, 16 wiederum ebenfalls als Kamera, Ultraschallsensor, Lidarsensor oder Radarsensor ausgebildet sein kann. Die Erfassungseinrichtungen 12, 14, 16 können auch gleich ausgebildet sein. Beispielsweise kann die erste Erfassungseinrichtung 12 als Kamera mit einer geringen Brennweite ausgebildet sein, die zweite Erfassungseinrichtung 14 kann als Kamera mit mittlerer Brennweite ausgebildet sein und die dritte Erfassungseinrichtung 16 kann als Kamera mit einer hohen Brennweite ausgebildet sein.

Das Kraftfahrzeug 10 weist ferner zumindest eine fahrdynamische Einrichtung 24 auf, beispielsweise in Form einer Beschleunigungseinrichtung, insbesondere im vorliegenden Ausführungsbeispiel jedoch in Form einer Bremseinrichtung. Des Weiteren zeigt die FIG 1 eine Bewegungsrichtung 26 des Kraftfahrzeugs 10. Ferner sind sieben Zeitpunkte t1 bis t7 gezeigt. Dabei kann sich ein erfasstes Objekt 28 insbesondere aufgrund einer Bewegung des Kraftfahrzeugs 10 zu unterschiedlichen Zeitpunkten t1 bis t7 dem Kraftfahrzeug 10 annähern. Die entsprechenden Positionen des Objekts 28 können sich dabei über die Zeit hinweg unterschiedlich verhalten, beispielsweise aufgrund einer Eigenbewegung des Objekts 28.

Die FIG 1 zeigt ferner eine erste Grenze 30, bei welcher eine Entscheidung getroffen werden muss, ob eine sicherheitsgerichtete Reaktion, beispielsweise eine Bremsung des Kraftfahrzeugs 10, eingeleitet werden muss. Beispielsweise kann dies 500 Meter zwischen dem Objekt 28 und dem Kraftfahrzeug 10 betragen. Des Weiteren ist eine Referenzbewertung 32 gezeigt.

Insbesondere ist ferner gezeigt, dass das Kraftfahrzeug 10 ein Erfassungssystem 34 aufweist, wobei das Erfassungssystem 34 zumindest die Erfassungseinrichtungen 12, 14, 16 sowie eine elektronische Recheneinrichtung 36 umfassen kann. Die elektronische Recheneinrichtung 36 kann beispielsweise ferner eine künstliche Intelligenz 38 aufweisen.

Beim erfindungsgemäßen Verfahren zum Bestimmen eine Güte des Erfassungssystems 34 ist vorgesehen, dass das Objekt 28 in einer ersten Entfernung 40 mittels einer der Erfassungseinrichtungen 12, 14, 16 zum ersten Zeitpunkt t1 erfasst wird. Es erfolgt das Bestimmen von zumindest einem ersten Objektparameter 42 des Objekts 28 zum ersten Zeitpunkt t1 mittels der elektronischen Recheneinrichtung 36. Es wird das Objekt 28 zumindest in einer zweiten Entfernung 44 erfasst, wobei die zweite Entfernung 44 hier geringer ist als die erste Entfernung 40, mittels einer der Erfassungseinrichtungen 12, 14, 16 zu einem zum ersten Zeitpunkt t1 unterschiedlichen zweiten Zeitpunkt t2. Es erfolgt dann das Bestimmen von zumindest einem zweiten Objektparameter 46 des Objekts 28 zum zweiten Zeitpunkt t2 mittels der elektronischen Recheneinrichtung 36. Der erste Objektparameter 42 wird mit dem zweiten Objektparameter 46 verglichen und es erfolgt das Bestimmen der Güte des Erfassungssystems 34 in Abhängigkeit von dem Vergleich mittels der elektronischen Recheneinrichtung 36.

Wie bereits erwähnt, kann das Objekt 28 zum ersten Zeitpunkt t1 mit der gleichen Erfassungseinrichtung 12, 14, 16 erfasst werden, wie zum zweiten Zeitpunkt t2. Alternativ kann das Objekt 28 zum ersten Zeitpunkt t1 mit einer unterschiedlichen Erfassungseinrichtung 12, 14, 16 erfasst werden, wie zum zweiten Zeitpunkt t2. Dabei können die Erfassungseinrichtungen 12, 14, 16 unterschiedliche Arten von Erfassungseinrichtungen 12, 14, 16 sein. Ferner können die Erfassungseinrichtungen 12, 14, 16 auch als gleiche Art von Erfassungseinrichtungen 12, 14, 16 ausgebildet sein, wobei sich die Erfassungseinrichtungen beispielsweise 12, 14, 16 in der Erfassungsreichweite unterscheiden.

Weiterhin kann vorgesehen sein, dass ein Zeitunterschied, also eine Zeitdifferenz, zwischen dem ersten Zeitpunkt t1 und dem zweiten Zeitpunkt t2 beim Vergleichen und/oder beim Bestimmen der Güte berücksichtigt werden.

Als Objektparameter 42, 46 kann insbesondere eine Objektklasse und/oder Objektart und/oder Objektbewegung und/oder Objektposition bestimmt werden.

Weiterhin kann vorgesehen sein, dass zum Bestimmen des Objektparameters 42, 46 ein Kalman-Filter verwendet wird.

Es kann weiterhin vorgesehen sein, dass in Abhängigkeit von dem bestimmten Objektparameter 42, 46 eine Kollisionswahrscheinlichkeit zwischen dem Objekt 28 und dem Kraftfahrzeug 10 bestimmt wird. Dabei kann insbesondere eine Eigenbewegung des Kraftfahrzeugs 10 beim Bestimmen der Kollisionswahrscheinlichkeit berücksichtigt werden. Ferner kann in Abhängigkeit von der bestimmten Kollisionswahrscheinlichkeit ein Steuersignal für die fahrdynamische Einrichtung 24 des Kraftfahrzeugs 10 erzeugt werden, so dass die Kollision vermieden wird oder eine Schwere der Kollision zumindest reduziert wird.

Weiterhin kann vorgesehen sein, dass ein Unterschied einer Umgebung 48 des Kraftfahrzeugs 10 im ersten Zeitpunkt t1 zu einer Umgebung 48 zum zweiten Zeitpunkt t2 beim Vergleich berücksichtigt wird.

Insbesondere betrifft somit die Erfindung ein Erfassungssystem 34, insbesondere ausgebildet als so genanntes Multi-Sensor-System, bei dem eine Annäherung an das Objekt 28 oder eine Entfernung vom Objekt 28 erfolgt, das mit Hilfe der verfügbaren Erfassungseinrichtungen 12, 14, 16 erfasst und gegebenenfalls klassifiziert werden kann. Häufig kommen mehrstufige Multi-Sensor-Systeme, zum Beispiel Kameras mit mehreren Brennweiten und dazu Lidare, zum Einsatz, um verschiedene Szenarien abzudecken. Dies können zum Beispiel neben der Erfassung weit entfernter Objekte 28 auch Objekte 28 im Mittel- oder Nahbereich sein, um zum Beispiel eine sichere Einfahrt in einen Bahnhof mit wartenden Passagieren sicherzustellen oder um das sichere Starten eines Zuges, beispielsweise in der Nahbereichsüberwachung, zu gewährleisten. Die Detektion in unterschiedlichen Entfernungsbereichen wird beispielsweise durch die Nutzung von Kameras mit unterschiedlichen Brennweiten realisiert. Jedoch ist das Verfahren auch mit einem einzigen Sensor möglich.

Die FIG 1 veranschaulicht dabei die Erfindung näher. Die unterschiedlichen Erfassungsbereiche 18, 20, 22 sind dabei für die drei unterschiedlichen Erfassungseinrichtungen 12, 14, 16 gezeigt. Diese können vom gleichen oder unterschiedlichen Sensortyp sein. Dabei wird insbesondere dargestellt, wie sich die Trajektorie des Objekts 28 im Fahrweg oder beispielsweise Gleis bei Annäherung darstellen könnte. Bei zunehmender Beobachtungszeit und bei verringerter Entfernung verbessert sich die Chance, das Objekt 28 zu detektieren und richtig zu erkennen, insbesondere eine Klassifikation, eine Position und eine Bewegung entsprechend detektieren zu können.

Umgekehrt müssen zum Beispiel sicherheitsgerichtete Entscheidungen oftmals frühzeitig beziehungsweise in einer gewissen Entfernung zum Objekt 28 getroffen werden. Dies ist im Bild durch die Grenze 30 veranschaulicht. Die sicherheitsgerichtete Entscheidung könnte unter Berücksichtigung des geschwindigkeitsabhängigen Bremswegs und gegebenenfalls auch unter Berücksichtigung der Bewegung des Objekts 28 zum Beispiel das Einleiten einer Bremsung sein. Während der Bremsung wird es aber in vielen Fällen möglich sein, das Objekt 28 weiter und besser zu beobachten und zum Beispiel genauer zu bestimmen/zu klassifizieren. Dies kann dann natürlich auch dazu führen, dass eine sicherheitsgerichtete Reaktion aufgehoben wird. Es wird vorausgesetzt beziehungsweise das Erfassungssystem 34 ist so zu gestalten, dass in den meisten Fällen ein zuverlässiges Tracking des Objekts 28 zum Beispiel durch einen Fusionsalgorithmus, wie einem Kalman-Filter, möglich ist. Dies kann bei Verdeckung oder signifikanter Geschwindigkeit des Objekts 28 nicht gelten und kann zum Ausschluss dieser Beobachtung aus der Gesamtstatistik führen.

Aus verlängerter Beobachtungsdauer sowie bei der Anwendung präziser durchführbarer Beobachtungen kann insbesondere eine höhere Konfidenz, Detektion und Klassifikation realisiert werden, wodurch für eine Referenzbewertung 32 ein signifikant höheres Vertrauensniveau realisiert werden kann. Diese Referenzbewertung 32 wird herangezogen, um die Güte der Entscheidung, die sicherheitsgerichtete Reaktion einzuleiten, also zum Beispiel dass gebremst werden sollte, zu überprüfen. So können Fehlentscheidungen, wie zum Beispiel unnötiges Bremsen oder unterlassenes Bremsen, in den meisten Fällen erkannt werden und permanent überwacht werden.

Das bereits geschilderte Verfahren kann sich dabei nicht nur auf den akuten Gefährdungsbereich beschränken. Es kann auch in benachbarten Bereichen, zum Beispiel auf dem Bürgersteig oder neben dem Gleis, auf dem Gegengleis, auf der Gegenfahrbahn, durchgeführt werden. Selbstverständlich ist zu konstatieren, dass hier gegebenenfalls leicht abweichende Umgebungen und Szenarien vorliegen. Diese Ergebnisse können ebenfalls herangezogen werden, die Güte des Perzeptionssystems/Erfassungssystems 34 abzuschätzen. Wenn weitere Bereiche einbezogen werden, wächst natürlich die statistische Basis und damit das Vertrauen in die Abschätzung.

Sollte das Objekt 28 nicht sicher getrackt/nachverfolgt werden können, so kann auf eine Bewertung verzichtet oder die Bewertung auf den Zeitraum beschränkt werden, zu dem eine hinreichend sichere Verfolgung gewährleistet ist. Entsprechende Ereignisse können ausgefiltert werden oder im Sinne einer Worst-Case-Bewertung berücksichtigt werden. Es ist statistisch zu überwachen, wie oft das Tracking versagt. Im Falle von unterbliebenen erforderlichen Sicherheitsreaktionen, den so genannten False Negatives, und gleichzeitig fehlerhafter Referenzbewertung 32 kann oftmals eine nachträgliche Korrektur der zugrundeliegenden Statistik ermöglicht werden, indem die dann auftretenden Unfälle hinzugerechnet würden. Im Falle von Near Misses, hier hat sich also beispielsweise das Objekt 38 im letzten Moment aus dem Kollisionspfad entfernt, würde in diesem seltenen Falle eine Unsicherheit verbleiben, da eine Kollisionserkennung nicht erfolgt.

Die Referenzbewertung 32 kann teilweise mit sowieso vorhandenen nicht-Kl-Methoden oder mit Kl-basierten Methoden, insbesondere Detektoren beziehungsweise Klassifikatoren erfolgen, es ist jedoch auch möglich, für das Verfahren zusätzliche nicht-KI- oder KI-basierte Detektoren beziehungsweise Klassifikatoren einzusetzen. Ziel ist, unter Ausnutzung der Annäherung und deutlich verlängerten Beobachtung eine relativ hohe Konfidenz für die Referenzbewertung 32 zu erzielen. Dabei ist insbesondere klar, dass es sich nicht um eine perfekte "Ground Truth" handelt, weshalb vorliegend insbesondere der Name "Weak Ground Truth" verwendet werden kann.

Die Erkennungsraten über die gesamte Sensorstrecke können für relevante Objekte 28 unter Beachtung entsprechender Sicherheitsmaßnahmen, insbesondere Gegengleis, Weiche gestellt, Puppen oder dergleichen, empirisch und/oder mit Hilfe von Simulationen ermittelt werden.

Stationäre größere Objekte 28 auf dem Gleis beziehungsweise verallgemeinert größere Objekte 28, denen das Kraftfahrzeug 10 nicht ausweichen kann oder die nicht selbst ausweichen, führen zu einer Kollisionsdetektion und damit einer Offenbarung der Ground Truth. Dies gilt jedoch nicht für Objekte 28 nahe neben dem Gleis oder der Straße, die ebenfalls zur Überprüfung der Qualität des Erfassungssystems 34 herangezogen werden können.

Hinreichend große Objekte 28, die sich selbst aus dem Gleis oder von der Fahrbahn entfernen oder denen zum Beispiel im Falle des Automobilverkehrs ausgewichen werden muss, wie bereits erwähnt die so genannten Near Misses, führen nicht zu einer Kollisionsdetektion. Hier kann eine Restunsicherheit über die Ground Truth verbleiben, insofern keine manuell durchgeführte Überprüfung basierend auf eine Protokollierung der Daten erfolgt. Die erhöhte Unsicherheit bei verringerter Beobachtungsdauer kann mit einem Gewichtungsfaktor für die Gesamtstatistik berücksichtigt werden, der sich zum Beispiel an dem in FIG 1 dargestellten und zum Beispiel empirisch oder per Simulation ermittelten Erkennungswahrscheinlichkeiten orientiert. Diese Erkennungswahrscheinlichkeiten können gegebenenfalls klassenspezifisch oder in Bezug auf Objektparameter, wie zum Beispiel die Größe bestimmt werden.

Zur Veranschaulichung des Verfahrens werden nun zwei Beispiel aus der Zugdomäne vorgebracht, wobei diese auch beispielsweise auf den Automobilbereich anwendbar sind. Ein erstes Beispiel beschäftigt sich damit, dass ein Betonklotz als Objekt 28 auf der Schiene ist. Ein Zug fährt dabei leichte Kurven, sonst ist jedoch die Trajektorie wie beispielsweise in der FIG 1 dargestellt. Die Annahme ist ein zuverlässiges Objekttracking während der Annäherung.

Zum ersten Zeitpunkt t1 detektiert die dritte Erfassungseinrichtung 16 ein mögliches Objekt 28 auf der Schiene. Zum zweiten Zeitpunkt t2 klassifiziert die elektronische Recheneinrichtung 36 auf Basis der dritten Erfassungseinrichtung 16 das Objekt 28 auf der Schiene mit 90 Prozent als Betonklotz und mit 10 Prozent als ungefährliches Objekt 28. Im Beispiel unterbleibt in 10 Prozent der Fälle jetzt die sicherheitsgerichtete Reaktion. Zum Zeitpunkt t3 kann in 5 Prozent der Fälle die sicherheitsgerichtete Reaktion weiterhin unterbleiben, in weiteren 5 Prozent der Fälle wird die sicherheitsgerichtete Reaktion jetzt zu spät eingeleitet.

Zum Zeitpunkt t4 erfasst die zweite Erfassungseinrichtung 14 das Objekt 28, die Erkennungswahrscheinlichkeit steigt weiter auf 97 Prozent. In weiteren 3 Prozent der Fälle erfolgt die sicherheitsgerichtete Reaktion verspätet. Zum fünften Zeitpunkt t5 steigt die Erkennungswahrscheinlichkeit weiter auf 99 Prozent. In weiteren 2 Prozent der Fälle erfolgt die sicherheitsgerichtete Reaktion verspätet.

Zum sechsten Zeitpunkt t6 erfasst die erste Erfassungseinrichtung 12 das Objekt 28, die Erkennungswahrscheinlichkeit steigt weiter auf beispielsweise 99,2 Prozent. In weiteren 0,2 Prozent der Fälle erfolgt die sicherheitsgerichtete Reaktion verspätet. Zum siebten Zeitpunkt t7 steigt die Erkennungswahrscheinlichkeit weiter auf 99,9 Prozent und nähert sich einer sicheren Erkennung, insbesondere im Ground Truth, weiter an. In weiteren 0,7 Prozent der Fälle erfolgt die sicherheitsgerichtete Reaktion verspätet.

Anschließend erfolgt die Kollision des Zuges mit dem Betonklotz, was insbesondere als sichere Kenntnis der Ground Truth angenommen werden kann. Dies kann ebenfalls gelten für alle verspäteten Bremsungen. Auch im Falle der rechtzeitig ausgelösten Bremsung kann die Ground Truth bekannt sein, der Zug kommt dann eben beispielsweise vor dem Betonklotz zum Stehen.

Im Falle von Personen könnte sich der Fall ergeben, dass trotz verspäteter Bremsung, zum Beispiel zum dritten Zeitpunkt t3, aufgrund der Eigenbewegung der Person, beispielsweise zum Zeitpunkt t5, eine rechtzeitige Entfernung aus dem Gefährdungsbereich erfolgt. Möglicherweise ist dann auch eine Beobachtung nicht mehr möglich. Für die statistische Erfassung kann dann auch nur der Beobachtungszeitraum zugrunde gelegt werden, hier also eine Erkennungswahrscheinlichkeit von 99 Prozent, im Gegensatz von 99,7 Prozent beim siebten Zeitpunkt t7.

Als zweites Beispiel kann eine Plastikplane auf dem Gleis angesehen werden. Zum ersten Zeitpunkt t1 erfasst die erste Erfassungseinrichtung 12 ein mögliches Objekt 28 auf der Schiene. Zum zweiten Zeitpunkt t2 klassifiziert die elektronische Recheneinrichtung 36 auf Basis der ersten Erfassungseinrichtung 16 das Objekt 28 auf der Schiene beispielsweise als Person. Im Beispiel erfolgt jetzt die sicherheitsgerichtete Reaktion. Zum dritten Zeitpunkt t3 wird das Objekt 28 weiterhin als Person klassifiziert, wenn auch mit verminderter Konfidenz, daher wird auch die sicherheitsgerichtete Reaktion nicht zurückgenommen.

Zum vierten Zeitpunkt t4 erfasst nun die zweite Erfassungseinrichtung 14 das Objekt 28. Die Klassifikation zeigt nun nur noch eine geringe Wahrscheinlichkeit, dass es sich um eine Person handeln könnte. Jedoch wird die sicherheitsgerichtete Reaktion noch nicht zurückgenommen. Zum fünften Zeitpunkt t5 erfasst die zweite Erfassungseinrichtung 14 weiterhin das Objekt 28. Die Klassifikation zeigt nun nur noch eine verschwindend kleine Wahrscheinlichkeit, dass es sich um eine Person handeln könnte. Die sicherheitsgerichtete Reaktion wird zurückgenommen.

Zum sechsten Zeitpunkt t6 und zum siebten Zeitpunkt t7 wird das Objekt 28 weiter beobachtet. Sollte die Klassifikation wieder eine Person nahelegen, wird die sicherheitsgerichtete Reaktion weiter eingeleitet, was im Falle einer Person zu spät sein könnte. Im Falle einer Kollision offenbart sich der Ground Truth und wird für die Statistik der False Positives/Negatives statistisch berücksichtigt.

Im Falle, dass die Plastikplane, zum Beispiel durch Wind verweht wird, kann auch dies durch die Erfassungseinrichtungen 12, 14, 16 erfasst werden und geht in die Statistik für die Beurteilung der False Positives ein. Sollte dies frühzeitig erfolgen, zum Beispiel zum vierten Zeitpunkt t4 und nicht zum siebten Zeitpunkt t7, so kann eine deutlich reduzierte Erkennungswahrscheinlichkeit vorliegen, so kann dies mit einem Gewichtungsfaktor in Bezug auf die Gesamtstatistik berücksichtigt werden.

## Patentansprüche

1. Verfahren zum Bestimmen einer Güte eines Erfassungssystems (34) eines Trägersystems, mit den Schritten:
- Erfassen eines Objekts (28) zumindest in einer ersten Entfernung (40) mittels einer Erfassungseinrichtung (12, 14, 16) des Erfassungssystems (34) zumindest zu einem ersten Zeitpunkt (t1);
- Bestimmen von zumindest einem ersten Objektparameter (42) des Objekts (28) zum ersten Zeitpunkt (t1) mittels einer elektronischen Recheneinrichtung (36) des Erfassungssystems (34);
- Erfassen des Objekts (28) zumindest in einer zweiten Entfernung (44) mittels einer Erfassungseinrichtung (12, 14, 16) des Erfassungssystems (34) zumindest zu einem zum ersten Zeitpunkt (t1) späteren zweiten Zeitpunkt (t2);
- Bestimmen von zumindest einem zweiten Objektparameter (46) des Objekts (28) zum zweiten Zeitpunkt (t2) mittels der elektronischen Recheneinrichtung (36);
- Vergleichen des ersten Objektparameters (42) mit dem zweiten Objektparameter (46) mittels der elektronischen Recheneinrichtung (36); und
- Bestimmen der Güte des Erfassungssystems (34) in Abhängigkeit von dem Vergleich mittels der elektronischen Recheneinrichtung (36).

2. Verfahren nach Anspruch 1, **dadurch gekennzeichnet, dass**
das Objekt (28) zum ersten Zeitpunkt (t1) mit der gleichen Erfassungseinrichtung (12, 14, 16), wie zum zweiten Zeitpunkt (t2) erfasst wird.

3. Verfahren nach Anspruch 1, **dadurch gekennzeichnet, dass**
das Objekt (28) zum ersten Zeitpunkt (t1) mit einer unterschiedlichen Erfassungseinrichtung (12, 14, 16), wie zum zweiten Zeitpunkt (t2) erfasst wird.

4. Verfahren nach Anspruch 3, **dadurch gekennzeichnet, dass**
als Erfassungseinrichtungen (12, 14, 16) unterschiedliche Arten von Erfassungseinrichtungen (12, 14, 16) bereitgestellt werden.

5. Verfahren nach Anspruch 3, **dadurch gekennzeichnet, dass**
als Erfassungseinrichtungen (12, 14, 16) gleiche Arten von Erfassungseinrichtungen (12, 14, 16) bereitgestellt werden, wobei sich die Erfassungseinrichtungen (12, 14, 16) in der Erfassungsreichweite unterscheiden.

6. Verfahren nach einem der vorhergehenden Ansprüche, **dadurch gekennzeichnet, dass** ein Zeitunterschied zwischen dem ersten Zeitpunkt (t1) und dem zweiten Zeitpunkt (t2) beim Vergleichen und/oder beim Bestimmen der Güte berücksichtigt wird.

7. Verfahren nach einem der vorhergehenden Ansprüche, **dadurch gekennzeichnet, dass** als Objektparameter (42, 46) eine Objektklasse und/oder eine Objektart und/oder eine Objektbewegung und/oder eine Objektposition bestimmt werden.

8. Verfahren nach Anspruch 7, **dadurch gekennzeichnet, dass**
zum Bestimmen des Objektparameters (42, 46) ein Kalmanfilter verwendet wird.

9. Verfahren nach einem der vorhergehenden Ansprüche, **dadurch gekennzeichnet, dass** in Abhängigkeit von dem bestimmten Objektparameter (42, 46) eine
Kollisionswahrscheinlichkeit zwischen dem Objekt (28) und dem Trägersystem bestimmt wird.

10. Verfahren nach Anspruch 9, **dadurch gekennzeichnet, dass**
eine Eigenbewegung des Trägersystems beim Bestimmen der Kollisionswahrscheinlichkeit berücksichtigt wird.

11. Verfahren nach Anspruch 9 oder 10, **dadurch gekennzeichnet, dass** in Abhängigkeit von der bestimmten Kollisionswahrscheinlichkeit ein Steuersignal für einen fahrdynamische Einrichtung (24) des Trägersystems erzeugt wird, so dass die Kollision vermieden oder eine Schwere der Kollision reduziert wird.

12. Verfahren nach einem der vorhergehenden Ansprüche, **dadurch gekennzeichnet, dass** ein Unterschied einer Umgebung (48) des Trägersystems im ersten Zeitpunkt (t1) zu einer Umgebung (48) zum zweiten Zeitpunkt (t2) beim Vergleich berücksichtigt werden.

13. Computerprogrammprodukt mit Programmcodemitteln, welche eine elektronische Recheneinrichtung (36) dazu veranlassen, wenn die Programmcodemittel von der elektronischen Recheneinrichtung (36) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Erfassungssystem (34) für ein Trägersystem, mit zumindest einer Erfassungseinrichtung (12, 14, 16) und mit einer elektronischen Recheneinrichtung (36), wobei das Erfassungssystem (34) zum Durchführen eines Verfahrens nach einem der Ansprüche 1 bis 12 ausgebildet ist.
